# EUROPEAN PATENT APPLICATION

(11) **EP 4 803 330 A1**
(43) Date of publication of application: **09.09.2026**
(21) Application number: 26160051.4
(22) Date of filing: 23.02.2026
(51) Int. Cl.: B60C 11/12

(54) **TIRE WITH SIPES**

(30) Priority: 04.03.2025 US 202519069529
(71) Applicant: The Goodyear Tire & Rubber Company, Akron, OH 44316 (US)
(72) Inventor: SCHOEPPNER, Nicholas Thomas, Akron, 44316 (US); SHONDEL, Jonathan James, Massillon, 44646 (US); SKURICH, Michael Stefan, Canton, 44718 (US); JUERGENS, Zachary William, Canton, 44708 (US)
(74) Representative: Leslie, Edward

(57) **Abstract**

A tire comprising a circumferential tread portion including at least one sipe extending in an elongated direction transversely to a direction of rotation of the tire and having a pair of opposite sidewalls is disclosed. In a first aspect, the pair of opposite sidewalls includes a leading sidewall and a trailing sidewall with respect to the direction of rotation of the tire, wherein the trailing sidewall extends essentially linearly along its radial height, and the leading sidewall comprises protrusions along its radial height, which extend along the elongated direction and have radially outer top sides, and wherein at least a majority of the protrusions are chamfered along their radially outer top sides. In a second aspect, the pair of opposite sidewalls extends along the elongated direction, wherein at least one of the sidewalls comprises protrusions along its radial height, which extend along the elongated direction and have radially outer sides, wherein at least a majority of the protrusions are chamfered along their radially outer sides, and wherein (i) a radially outermost edge of one of the sidewalls comprising protrusions is chamfered over a majority of its length along the elongated direction and/wherein (ii) at least one of the sidewalls comprises at least one radially elongated bump stop extending along a majority of a radial height of the sipe and protruding towards an opposite sidewall of the sidewalls.

## Description

### Field of the Invention

The present invention is directed to a tire, such as a pneumatic tire, comprising a tread portion having sipes.

### Background of the Invention

Winter tires and modern all-season tires typically have tread portions with sipes, which help to improve the grip of the tires on snow. While advanced sipe geometries have been developed over the past decades, significant room for improvement remains.

### Summary of the Invention

The invention relates to a tire in accordance with claim 1.

Dependent claims refer to preferred embodiments of the invention.

In a first preferred aspect of the present invention, the invention is directed to a tire comprising a circumferential tread portion including at least one sipe extending in an elongated direction transversely to a direction of rotation of the tire and having a pair of opposite sidewalls including a leading sidewall and a trailing sidewall with respect to the direction of rotation of the tire. Furthermore, the trailing sidewall extends essentially linearly along its radial height, and the leading sidewall comprises protrusions along its radial height, which extend along the elongated direction and have radially outer top sides, and wherein at least a majority of the protrusions are chamfered along their radially outer top sides.

In a second preferred aspect of the present invention, the invention is directed to a tire comprising a circumferential tread portion including at least one sipe extending in an elongated direction transversely to a circumferential direction of the tire and having a pair of opposite sidewalls extending along the elongated direction, and wherein at least one of the sidewalls comprises protrusions along its radial height, which extend along the elongated direction and have radially outer sides. Furthermore, at least a majority of the protrusions are chamfered along their radially outer sides, and a radially outermost edge of one of the sidewalls comprising protrusions is chamfered over a majority of its length along the elongated direction.

In a third preferred aspect of the present invention, the invention is directed to a tire comprising a circumferential tread portion including at least one sipe extending in an elongated direction transversely to a circumferential direction of the tire and having a pair of opposite sidewalls extending along the elongated direction. At least one of the sidewalls comprises protrusions along its radial height, which extend along the elongated direction and have radially outer sides, wherein at least a majority of the protrusions are chamfered along their radially outer sides, and wherein at least one of the sidewalls comprises at least one radially elongated bump stop extending along a majority of a radial height of the sipe and protruding towards an opposite sidewall of the sidewalls to avoid closing of the sipe between the sidewalls adjacent the bump stop.

### Brief Description of the Drawings

The invention will be described by way of example and with reference to the accompanying drawings in which:
FIG. 1 is a schematic partial perspective view of a tire in accordance with an embodiment of the present invention;
FIG. 2 is a schematic enlarged view of a part of the tread portion of the tire already shown in Figure 1;
FIG. 3 is a schematic cross-section of a sipe of a tread block of the tread portion shown in Figure 2
FIG. 4 is a schematic cross-section of a sipe in a tread block according to another embodiment of the present invention;
FIG. 5 is a schematic perspective view of a tread block comprising the sipe already shown in Figure 4;
FIG. 6 is a schematic perspective view of a metal blade for molding a sipe as shown in Figures 4 and 5;
FIG. 7 is a schematic perspective view of a part of a tread portion of a tire, according to still another embodiment of the present invention;
FIG. 8 is a schematic cross-section of a sipe of a tread block of the tread portion shown in Figure 7;
FIG. 9 is schematic cross-section of another sipe of still another tread block in accordance with still another embodiment of the present invention;
FIG. 10 is a schematic perspective view of a tread block comprising the sipe already shown in Figure 9; and
FIG. 11 is a schematic perspective view of another metal blade for molding a sipe as shown in Figures 9 and 10.

### Detailed Description of Preferred Embodiments of the Invention

According to a said first preferred aspect, the invention is directed to a tire, such as a pneumatic tire, comprising a circumferential tread portion including at least one sipe extending in an elongated direction transversely to a direction of rotation of the tire and having a pair of opposite sidewalls (extending along the elongated direction) including a leading sidewall and a trailing sidewall with respect to the direction of rotation of the tire. Furthermore, the trailing sidewall extends essentially linearly along its radial height, and the leading sidewall comprises protrusions along its radial height, which extend along the elongated direction and have radially outer top sides, and wherein at least a majority of the protrusions are chamfered along their radially outer top sides.

Thus, said sipe, or winter sipe, has different leading sidewall and trailing sidewall geometries. While the trailing sidewall extends linearly along its radial height, the leading sidewall comprises said protrusions, wherein each protrusion comprises a chamfered radially outer top side, or in other words top portion, which helps to guide snow into the sipe and towards the trailing sidewall for an improved snow grip. As multiple of the protrusions are provided along the radial height of the sipe, such an effect is repeatedly provided over tire life and/or tread wear. The protrusions may also be described as protruding towards the opposite and/or trailing sidewall.

In one embodiment, the leading sidewall comprises from 2 to 10, preferably from 3 to 7, of the protrusions, or said protrusions being chamfered, along its radial height.

In another embodiment, the leading sidewall comprises a radially outermost leading edge which is chamfered over a majority of its length along the elongated direction.

In still another embodiment, the protrusions further have radially inner bottom sides, wherein the radially inner bottom sides protrude essentially perpendicularly to the radial direction into the sipe and/or towards the opposite trailing sidewall.

In still another embodiment, the protrusions are provided consecutively along the radial height of the sipe such that a radially inner bottom side of a first protrusion is radially adjacent and/or in contact with a radially outermost portion of a radially outer top side of a radially neighboring protrusion. Optionally, a radial distance between radially neighboring and/or radially adjacent protrusions is less than 10%, preferably less than 5%, of the total radial height of the sipe.

In still another embodiment, one or more of the protrusions, or the majority of the protrusions, or all of the protrusions, protrude over one or more of i) more than 50% of a maximum width of the sipe (e.g., from 55% to 80% of a maximum width of the sipe), and ii) (individually) over 5% to 30%, or 5% to 25%, of a (maximum) radial height of the sipe. A (maximum) width of a sipe is determined in a direction perpendicular to the elongated direction and perpendicular to the radial direction, or equivalent. A (maximum) radial height of a sipe is measured in the radial direction, such as between a bottom of the sipe and a radially outermost surface and/or edge of the sipe.

In still another embodiment, each protrusion of the protrusions being chamfered along their radially outer top side, comprises a chamfer having an angle (or chamfer angle) with the radial direction within a range of 110° to 160 °. In other words, the chamfer protrudes with the chamfer angle in a radially inner direction and/or towards the opposite trailing sidewall. For instance, the width of the sipe decreases in a radially inner direction between a chamfered top side of one (or each) of the protrusions and the opposite trailing sidewall. Optionally, the protrusions being chamfered along their radially outer top side can be further described as being chamfered towards a (radially inner) bottom of the sipe.

In still another embodiment, said protrusions have outermost end portions which face and extend essentially in parallel to the linearly extending trailing sidewall. In other words, said outermost end portions can be considered as portions of the protrusions which protrude furthest towards the opposite sidewall, i.e., the trailing sidewall. In addition, or alternatively, the outermost end portions can be described as extending essentially along a radial direction of the tire.

In still another embodiment, the tire is a directional tire and/or has an arrow on its tire sidewall indicating a direction of rotation, such as including an arrow sign. The term directional tire as such is well-known in the tire art.

According to said second aspect of the present invention, a tire (such as a pneumatic tire) comprises a circumferential tread portion including at least one sipe extending in an elongated direction transversely to a circumferential direction (or direction of rotation) of the tire and having a pair of opposite sidewalls extending along the elongated direction, and wherein at least one of the sidewalls comprises protrusions along its radial height, which extend along the elongated direction and have radially outer sides. Furthermore, at least a majority of the protrusions are chamfered along their radially outer (top) sides, and a radially outermost edge of one of the sidewalls, comprising the protrusions, is chamfered over a majority of its length along the elongated direction.

Providing said edge of the sipe's sidewall with a chamfer helps snow to enter the sipe. The provision of further chamfered protrusions provides a similar effect over the life and/or treadwear of the tire.

In one embodiment, the radially outermost edge is formed by a first protrusion of the protrusions being chamfered along their radially outer sides. Preferably, the radially outermost edge is a radially outermost edge of a leading sidewall of the sipe and/or at least a leading sidewall of the tire comprises the protrusions (with respect to a direction of rotation of the tire).

In another embodiment, the protrusions are provided consecutively along the radial height of the sipe such that a radially inner bottom side of the first protrusion is radially adjacent, or (e.g., directly) in contact with a radially outermost portion of a radially outer top side of a radially neighboring protrusion, and/or a radially inner bottom side of the neighboring protrusion is radially adjacent, or (e.g., directly) in contact with a radially outermost portion of a radially outer top side of another radially lower neighboring protrusion.

In another embodiment, a radial distance between radially neighboring and/or radially adjacent protrusions is less than 10%, preferably less than 5%, of the total radial height of the sipe. In addition, or alternatively, a radial distance between radially neighboring and/or radially adjacent protrusions is less than 20%, preferably less than 10%, of the total radial height of one of these protrusions (such as the radially outer one or inner one of these protrusions).

In still another embodiment, an aspect ratio of a radial height to width (determined perpendicular to the elongated direction) of one or more of the protrusions is within a range of 0.5 to 4, preferably of 1 to 4, or even more preferably of 1 to 3. In one example, the aspect ratio is about 2.5. In another example, the aspect ratio is about 1.7.

In still another embodiment, each radially outer top side chamfers with an angle with the radial direction, which is within a range of 110° to 150°, and/or wherein each radially inner bottom side protrudes with an angle with the radial direction, which is within a range of 80° to 100° (preferably of 85° to 95°).

In still another embodiment, at least one of the sidewalls comprises at least one radially elongated bump stop extending along a majority of a radial height of the sipe and/or protruding towards another opposite sidewall of the sidewalls, such as to avoid closing of the sipe between the sidewalls adjacent the bump stop.

In still another embodiment, the bump stop extends from a radially outermost edge of the at least one sidewall along the majority of the radial height of the sipe, preferably along at least 80% of, or at least 90% of, or 100% of the radial height of the sipe. In particular, the term majority of shall also comprise the amount all of, unless indicated otherwise herein.

In still another embodiment, each of the bump stops has a width along the elongated direction within a range of 0.5 mm to 3 mm, preferably 0.8 mm to 2 mm.

In still another embodiment, a bump stop has an aspect ratio of its radial height to one of i) its width along the elongated direction and ii) its width perpendicular to the elongated direction, within a range of 4 to 20, preferably 6 to 15. In one example such a ratio is about 10.

In still another embodiment, the sipe has from 2 to 5 bump stops. Optionally, these bump stops are spaced apart from one another and/or extend essentially in parallel to one another.

In still another embodiment, a sum of widths (measured along the elongated direction) of the bump stops is less than 20%, preferably less than 15%, of the total extension of the sipe along the elongated direction.

In still another embodiment, both opposite sidewalls comprise the protrusions. Preferably, protrusions of one sidewall are radially shifted with respect to protrusions of an opposite sidewall of the sidewalls, optionally such that a chamfering radially outer side of a protrusion of one sidewall faces an essentially radially extending portion or face side of a protrusion of an opposite sidewall. Optionally, the radially extending portion or face side of the protrusion of the opposite sidewall can be described as a portion or side of the protrusion protruding furthest into the sipe.

In still another embodiment, at one or each of both opposite sidewalls, the protrusions form a sawtooth pattern extending along the radial height of the sipe. For instance, each protrusion may be considered as a tooth of the sawtooth pattern. In case the sipe has a sawtooth pattern of protrusions on each one of the opposite sidewalls, the sawtooth patterns preferably have the same radial frequency of teeth, and/or are radially shifted, or in other words radially offset, such as by about half of a radial height of a protrusion and/or tooth. Optionally, the radial height of at least a majority of the teeth is essentially the same.

In still another embodiment, a plurality of sipes of the tread portion may comprise such a sawtooth pattern formed by protrusions provided along the radial direction. Optionally, one or both opposite sidewalls of these sipes may comprise such a pattern. In addition, or alternatively, sawtooth patterns of different sipes and/or of different sidewalls can be radially shifted relative to one another. Such an arrangement can help to provide even more constant snow grip properties over the lifetime of the tire.

For instance, a radial shift of sawtooth patterns may also apply to the first aspect and/or its embodiments. In this context, it is possible that multiple sipes of the tread portion have leading sidewalls with protrusions forming a sawtooth pattern along the radial height of the respective leading sidewall, wherein different sipes, and thus different leading sidewalls, have sawtooth patterns radially shifted with respect to one another. For example, in one embodiment such a radial shift, or offset, may alternate every second sipe along the circumferential direction and/or direction of rotation. Such an arrangement helps again to provide a more homogenous snow grip over the lifetime of the tire.

According to the third aspect, a tire comprises a circumferential tread portion including at least one sipe extending in an elongated direction transversely to a circumferential direction of the tire and having a pair of opposite sidewalls extending along the elongated direction. At least one of the sidewalls comprises protrusions along its radial height, which extend along the elongated direction and have radially outer sides, wherein at least a majority of the protrusions are chamfered along their radially outer sides, and wherein at least one of the sidewalls comprises at least one radially elongated bump stop extending along a majority of a radial height of the sipe and protruding towards an opposite sidewall of the sidewalls, such as to avoid closing of the sipe between the sidewalls adjacent the bump stop.

Thus, the radially elongated bump stops help to keep the sipe open and allow snow to enter the sipe.

In one embodiment, the elongated bump stop has a flat face side and/or a flat face surface, which faces the opposite sidewall and/or is essentially parallel to the opposite sidewall.

In another embodiment, the elongated bump stop extends over at least 90% of the radial height of the sipe, or over 100% of the radial height of the sipe.

In still another embodiment, a first sidewall of the opposite sidewalls comprises protrusions being chamfered along their radially outer sides, wherein the at least one radially elongated bump stop is provided in between the protrusions of the first sidewall and protrudes towards a second sidewall of the opposite sidewalls, and/or extends over at least 90% of the radial height of the sipe. The provision of bump stops in between the protrusions also increases the stability of the protrusions and/or the first sidewall.

In still another embodiment, the bump stop protrudes towards the second sidewall essentially as far as the protrusions of the first sidewall protrude towards the second sidewall.

In still another embodiment, the sipe comprises at least two radially extending bump stops, which are spaced from one another along the elongated direction, and/or wherein each bump stop of the bump stops is provided in between the protrusions of the first sidewall.

It is emphasized that said at least one bump stop may also comprise features mentioned already in relation to the above first aspect and/or second aspect.

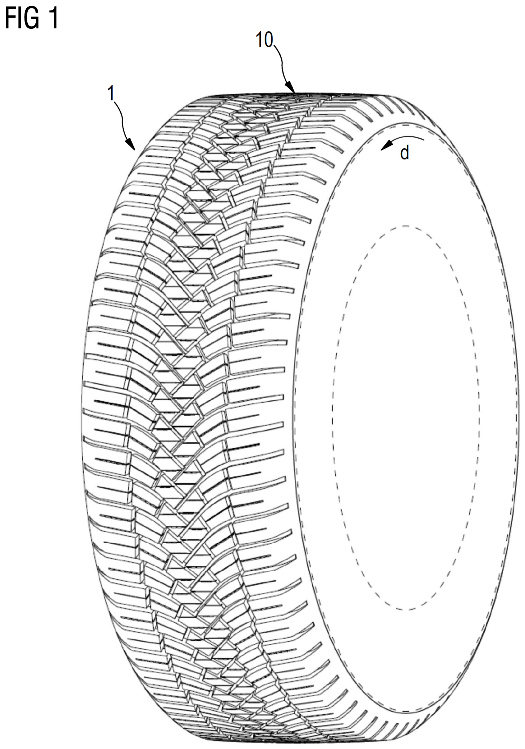

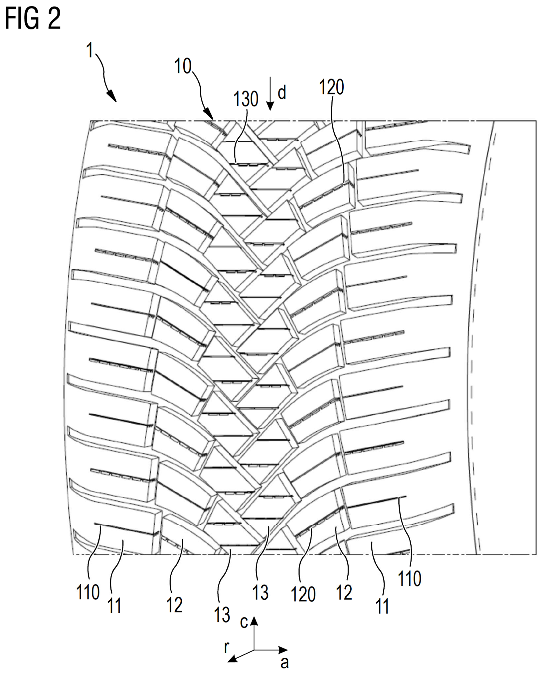

Figure 1 shows a schematic perspective view of an embodiment of a pneumatic tire 1 comprising a circumferential tread portion 10. In the present embodiment, tire 1 is a passenger car all-season tire. In other embodiments, a winter tire or a light truck tire may be provided. The tread portion 10 comprises a directional tread pattern, having a defined direction of rotation d. Further details of the tread portion 10 of tire 1 are described with respect to Figure 2 hereinbelow.

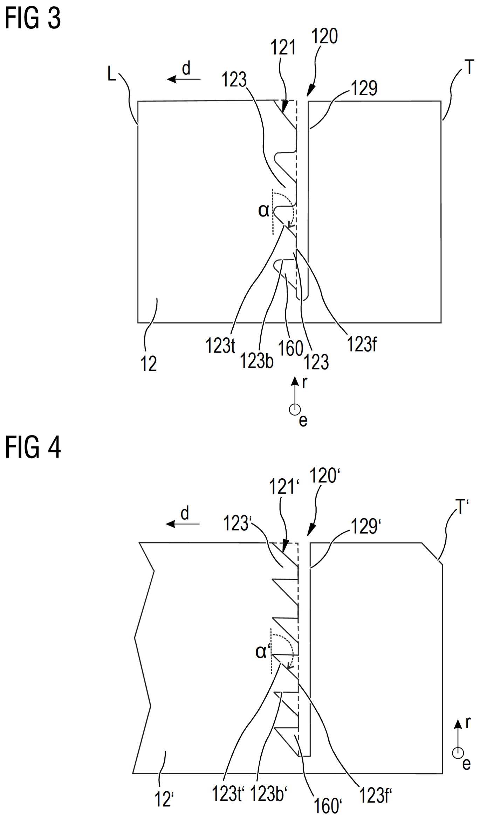

Figure 2 shows a schematic magnified view of the tread portion 10 of tire 1. The tread portion 10 comprises two circumferential rows of shoulder tread blocks 11, two meshing circumferential rows of center tread blocks 13, and two circumferential rows of intermediate tread blocks 12 which are respectively provided between each row of shoulder tread blocks 11 and an axially neighboring circumferential row of center tread blocks 13. Each tread block 11, 12, 13 comprises at least one sipe 110, 120, 130 which extends transversely to the direction of rotation d and/or the circumferential direction c of the tire 1. As an example, a sipe 120, as, e.g., provided in the row of tread blocks 12, is described in further details in Figure 3.

The axial direction a, the radial direction r, and the circumferential direction c are indicated in Figure 2 and in further Figures shown herein. The axial direction a is parallel to the axis of rotation of the tire. The radial direction r is perpendicular to the axial direction a. Furthermore, the circumferential direction c is parallel to an equatorial plane of the tire and perpendicular to the axial direction a, as well as to the radial direction r. A reference to one of these directions is not necessarily limited to a certain orientation of such a direction, unless indicated otherwise herein.

Figure 3 schematically shows a cross-section through a tread block 12. The direction of rotation d is again indicated for the sake of better orientation. A leading edge of the tread block 12 is indicated by reference sign L and a trailing edge of the tread block 12 is indicated by reference sign T. Furthermore, the tread block 12 comprises the sipe 120 which extends along the elongated direction e (and which can optionally be curved). The elongated direction e may also be mentioned as direction of elongation, or as direction of elongation of the sipe. The depth, or in other words the radial height, of the sipe 120 can be determined along the radial direction r. Moreover, the sipe 120 comprises two opposite sidewalls 121, 129 which extend along the elongated direction e. In particular, the sidewall 121 can be described as leading sidewall 121 and the sidewall 129 can be described as trailing sidewall 129 of the sipe 120. As further visible in Figure 3, the trailing sidewall 129 extends essentially linearly (or in other words straight-lined) along the radial direction r, whereas the leading sidewall 121 has a plurality of protrusions 123 along its radial height. Such protrusions 123 have a radially outer top side 123t, a radially inner bottom side 123b and a face side 123f which protrudes furthest towards the opposite trailing sidewall 129. The radially outer top side 123t of each protrusion is chamfered. In other words, the width of the sipe 120 (measured perpendicular to the elongated direction e) decreases in a radially inner direction along the radially outer top side 123t of each protrusion 123. Furthermore, the width of the sipe 120 is essentially constant along the face side 123f in the radial direction. The radially inner bottom side 123b of a protrusion 123 extends essentially perpendicular to the elongated direction e and perpendicular to the radial direction r. Furthermore, the chamfering top side 123t, or in other words, the chamfer of the top side 123t, has an angle α with the radial direction r as indicated in Figure 3, which is typically within a range of 110° to 160°, and in the present example about 135°. Preferably, as also indicated in Figure 3, transitions between radially adjacent protrusions 123 are curved, which helps to ease demolding of the sipe 120. Typically, an aspect ratio of a radial height to a protruding width of a protrusion 123 is within a range of 2 to 2.5. The protrusions 123 may be considered as forming a sawtooth pattern along the radial height of the sipe 120. The same applies to the protrusions 123' described in Figure 4, and protrusions in further embodiments described herein below. As further indicated in Figure 3, protrusions 123 may preferably be supported along the radial direction r by one or more radially elongated bump stops 160, such as extending from a radially outer surface of the tread block 12 towards the bottom of the sipe 120. For instance, bump stops 160 may help to increase the stability of the protrusions 123 against bending along the radial direction r, and/or may help to avoid closing of the sipe 120, e.g., due to forces essentially parallel to the direction of rotation d. Such optional radially extending bump stops are also described in relation to further embodiments herein below.

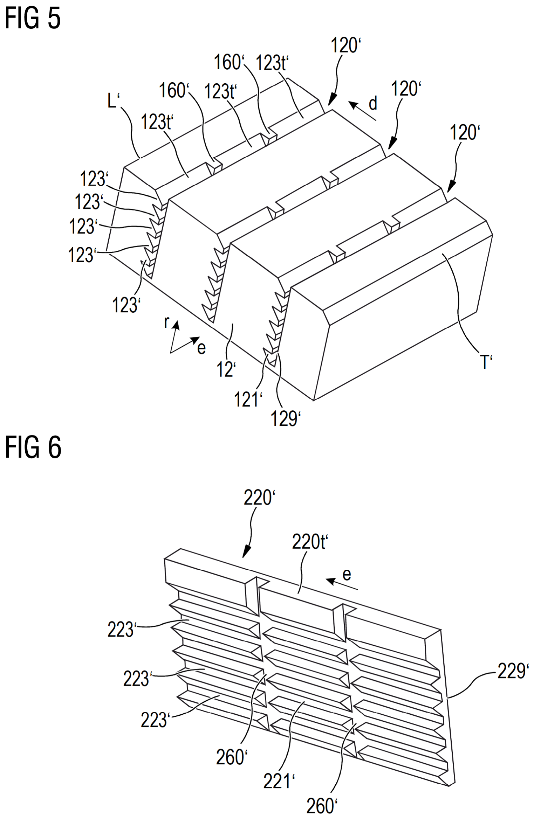

Figure 4 shows another embodiment of a partial schematic cross-section through a tread block 12', including a trailing edge T', and a sipe 120' having a leading sidewall 121' and a trailing sidewall 129'. The leading sidewall 121' comprises a plurality of protrusions 123' which have chamfered top sides 123t', radially extending face sides 123f', and bottom sides 123b' which extend essentially perpendicularly to the elongated direction e and the radial direction r. The direction of rotation d, such as of a directional tire, is again indicated. In the present example, the chamfer of each protrusion 123' is indicated with a chamfer angle α', which is again about 135° with the radial direction r. The radially outermost protrusion 123' is provided at the radially outer edge of the leading sidewall 121' of the sipe 120' so that the radially outer edge of the leading sidewall 121' can be considered as being chamfered. In contrast to the aforementioned embodiment, the embodiment of Figure 4 comprises a larger number of protrusions along the radial height of the sipe 120'. Similar to Figure 3, a projection of a radially extending bump stop 160' is also schematically indicated in Figure 4 by a dashed line. Such a column-like bump stop 160'extends from a radially outermost surface of the tread block 12' down to the radially inner bottom of the sipe 120'. While one or more of such bump stops are preferably also present in the embodiment according to Figure 1 to 3, they are considered as optional. Bump stop 160' is described in further details with respect to following Figures 5 and 6. Referring again to Figure 4, transitions between a radially outer top portion 123t', a face portion 123f', and a bottom portion 123b', as well as a radially adjacent or neighboring protrusion 123' are angled, or in other words, less curved as shown in the previously described embodiments. Furthermore, the tread block 12' comprises a chamfered trailing edge T' which may further improve snow grip of the tread block 12'.

Sipes as shown in Figure 3 or Figure 4 can be formed in a respective tread block via a blade, such as a metal blade held in a tread mold segment. Such metal blades can be manufactured by various techniques such as by casting, additive manufacturing (e.g., 3D-printing), cold-forming, machining, and other suitable techniques. Typical materials for blades include aluminum or steel.

Figure 5 shows a schematic perspective view of a tread block 12' having a chamfered trailing edge T' and including the sipe 120' corresponding to the partial cross-section of Figure 4. In particular, the tread block 12' comprises in the present embodiment three parallelly extending sipes 120' which extend along the elongated direction e through the tread block 12'. Each of the sipes 120' has a plurality of chamfered protrusions 123' including chamfered top sides 123t' at their respective leading sidewalls 121'. The trailing sidewalls 129' are extending essentially linearly along the radial direction r. The leading edge L' of the tread block 12' and the direction of rotation d of a corresponding tread portion and/or tire are indicated for the sake of better orientation. While the direction of rotation d is illustrated herein as being essentially perpendicular to the elongated direction e, this is not necessary in other embodiments. Typically, the elongated direction e is arranged transversely to the direction of rotation d and/or to the circumferential direction of the tire but does not need to have an angle of 90° with such a direction.

Furthermore, Figure 5 indicates each sipe 120' with a leading sidewall 121' comprising two bump stops 160' which protrude from each leading sidewall 121' towards an opposite trailing sidewall 129' and extend along a radial direction of the sipe 120' from a radially outermost top of the sipe 120' down to a radially inner bottom of the sipe 120'. On the one hand, such bump stops 160' help to avoid closing of the sipe 120'. On the other hand, they also improve the stiffness and/or stability of the protrusions 123' by radially interconnecting them.

Figure 6 shows a schematic perspective view of a blade 220' suitable for molding a sipe 120' as previously described in relation to Figures 4 and 5. In particular, the blade 220' comprises a surface structure which is complementarily shaped with respect to the shape of the corresponding sipe 120' (not shown in Figure 6). Thus, the blade 220' comprises on a first blade side 221' recesses 223', which extend along an elongated direction e of the blade 220', for forming the previously described protrusions 123' of the sipe 120'. Furthermore, the blade 220' comprises upright channels 260' on the same side 221', which extend perpendicularly to the elongated direction e, for forming said column-like bump stops 160' in the tread block 12'. In the present embodiment, the opposite blade side 229' is flat for forming the linearly extending sidewall 129' of the sipe 120'. It is noted that the present embodiment of the metal blade 220' comprises a top portion 220t' rendering the total height of the blade 220' larger than the total radial height of the sipe 120' to be molded. Such a larger top portion 220t' may be intended for mounting the blade 220' in a mold or mold segment for molding a tread portion. Such molds or mold segments (not shown herein) and the mounting and/or attachment of blades to such molds or mold segments are well-known in the art of tire molding.

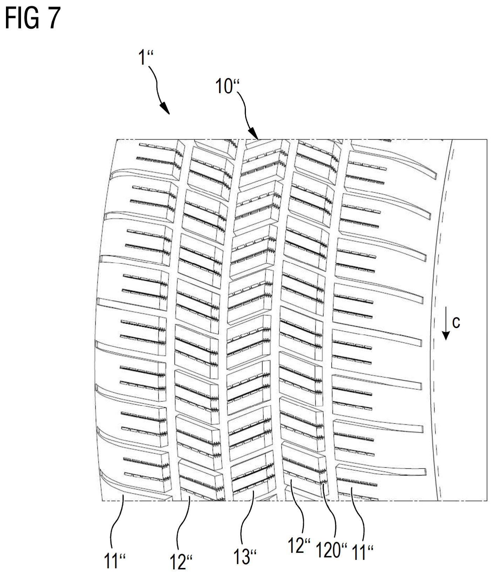

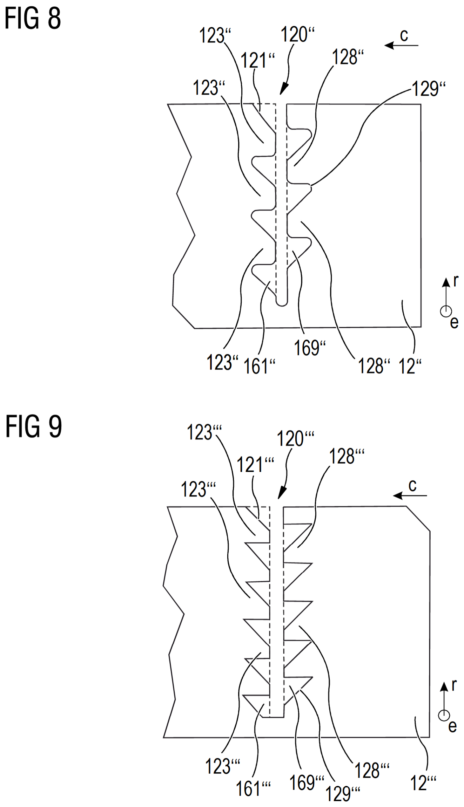

Figure 7 shows another partial perspective view of a tread portion 10" of a tire 1" in accordance with another embodiment of the present invention. In the present embodiment, the tread portion 10" comprises a non-directional, or in other words a two-directional tread pattern. Thus, the tire 1" has no preferred direction of rotation. Tire 1" comprises a plurality of rows of tread blocks, including two axially opposite and/or outer circumferential rows of shoulder tread blocks 11", one row of center tread blocks 13", and two rows of intermediate tread blocks 12", which are arranged between a respective row of shoulder tread blocks 11" and the row of center tread blocks 13". Each tread block has in the present and non-limiting example two sipes extending transversely to the circumferential direction c of the tire 1". As an example, a sipe 120" of one of the tread blocks 12" will be described in further details with respect to Figure 8.

Thus, Figure 8 shows a schematic cross-section of a sipe 120" extending along the elongated direction e though the tread block 12". The sipe 120" has two opposite sidewalls 121" and 129", wherein each of these sidewalls 121", 129" comprises multiple protrusions 123", 128" along the radial direction r, or, in other words, along its respective radial height. A projection of a radially extending bump stop 161" is shown at sidewall 121", and a projection of a radially extending bump stop 169" is shown at sidewall 129". Thus, this preferred but non-limiting embodiment comprises bump stops 161", 169" at both opposite sidewalls 121", 129" of the sipe 120", which help to support the protrusions against deformations and help to prevent closing of the sipe 120". However, in other embodiments, the sipe could be provided without bump stops, or may have one or more bump stops only at one of said opposite sidewalls. In the present embodiment, the protrusions 123", 128" of one of the sidewalls 121", 129" are radially shifted (typically by about half of the total height of a protrusion) with respect to the protrusions 128", 123" on the opposite one of the sidewalls 129", 121" so that a chamfered radially outer top side of a protrusion 123", 128" on one sidewall 121", 129" faces a radially extending face side of a protrusion 128", 123" of the opposite sidewall 129", 121". In the present embodiment, the sipe 120" has a chamfered radially outer top side of a protrusion at a radially outermost top of its sidewall 121", whereas a radially outermost top portion of the opposite sidewall 129" comprises a radially extending face side of a protrusion, facing the chamfered top side of the protrusion 123" of the sidewall 121'. It is possible to describe the protrusions 123", 128" on each sidewall 121", 129"as being arranged in a sawtooth pattern along the radial direction r, wherein preferably both patterns are radially shifted with respect to each other, such as by about half of the radial period of the pattern.

Figure 9 shows another schematic cross-section of a sipe 120‴ in a tread block 12‴, having two opposite sidewalls 121"', 129‴ comprising multiple adjacent protrusions 123"', 128‴ along the radial direction r of the tread block 12"'. In particular, the protrusions 123"', 128‴ extend along the elongated direction e and have chamfered radially outer top sides, radially extending face sides and circumferentially extending bottom sides. The sidewall 121‴ comprises a radially outermost protrusion forming with its chamfered radially outer top side a chamfered edge of the sidewall 121‴ at a radially outermost surface of the tread block 12"'. An opposite sidewall 129‴ of the sipe 120‴ starts at a radially outermost surface of the tread blocks 12‴ with a face side extending in parallel with the radial direction r, so that this face side faces a chamfered top side of the opposite protrusion 123‴ of the sidewall 121‴. In other words, each sidewall 121‴, 129‴ comprises a radially extending sawtooth-like pattern of protrusions 123"', 128‴ which are shifted, or in other words staggered, along the radial direction r, particularly by about half of the radial height of a protrusion 123"', 128‴, and/or a half of the period of the pattern. Column-like bump stops 161"', 169‴ are again indicated by dashed lines, which are provided in between the protrusions 123"', 128‴ with respect to the elongated direction e and/or interconnect the protrusions 123‴, 128‴ along the radial direction r, similar to other embodiments described herein.

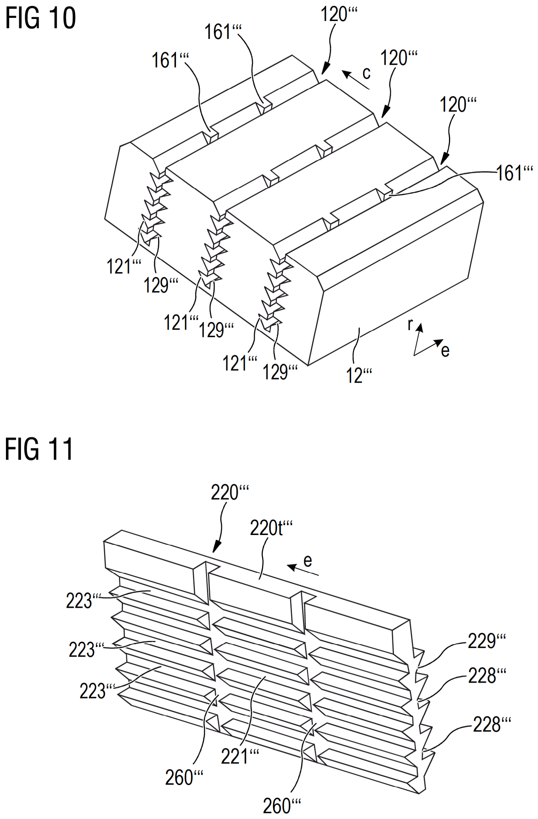

Figure 10 shows an exemplary tread block 12‴ including sipes 120‴ as shown in the cross-section of Figure 9. In particular, the tread block 12‴ comprises three sipes 120"'. Each sipe 120‴ has a plurality of said protrusions. Furthermore, two bump stops 161"', which are spaced apart from one another along the elongated direction e, are visible at the radially outer surface of the tread block 12‴ at each respective sidewall 121"'. Further bump stops, such as indicated in Figure 9, may be present at one or more opposite sidewalls 129‴, such as facing each of the bump stops 161"'. Alternatively, those may be shifted along the elongated direction e with respect to the bump stops 161‴. In another embodiment, the tread block comprises only one sipe, or, e.g., four or five sipes. In still another option, one or more sipes are oppositely oriented with respect to the circumferential direction c. Referring again to Figure 10, in the present embodiment, all three sipes 120‴ have at least one chamfered protrusion, and/or chamfered radially outermost edges of the sidewalls 121‴.

Figure 11 shows a metal blade 220‴ suitable for molding the sipe 120‴ shown in Figure 10. The blade 220‴ comprises recesses 223"', 228‴ extending along the elongated direction e of the blade 220‴ for molding complementary protrusions of respective sipes 120‴, which can be formed by the blade 220‴. The blade 220‴ has two opposite blade sides 221"', 229‴ for shaping and/or forming respective opposite sidewalls of said sipe 120"'. For this purpose, the recesses 223‴, 228‴ are staggered in a direction perpendicular to the elongated direction e, which results in said shifted and/or staggered sawtooth patterns of protrusions of the respectively molded opposite sidewalls. Previously mentioned bump stops can be formed by upright channels in the metal blade 220"', such as by the channels 260"'. Preferably, the blade 220‴ has a larger height than a sipe to be molded. In particular, a top portion 220t‴ is typically larger than the radial height of a sipe to be molded, particularly for the purpose of mounting the blade 220‴ in a mold or mold segment.

Preferably, sipes mentioned herein have a maximum width, measured perpendicular to the elongated direction, within a range of 0.2 mm to 2 mm preferably from 0.3 mm to 1.5 mm. Sipes can also be mentioned as snow sipes herein.

Preferably, a sipe depth, or in other words radial height, is within a range of 2 mm to 20 mm, preferably of 3 mm to 15 mm.

Preferably, a sipe as described herein above extends along the elongated direction essentially with one of a curved and straight shape. In particular, preferably, such a sipe does not extend with a zig-zag shape along the elongated direction. Moreover, preferably, it does not have a waffle shape.

In another embodiment, the tread portion comprises a plurality of tread blocks, wherein one or more of the plurality of tread blocks have a chamfer at a leading edge and/or a chamfer at a trailing edge of the respective tread blocks.

Typically, the tread portion comprises a plurality of tread blocks, wherein most of or all of the tread blocks of the plurality of tread blocks preferably comprise from 1 to 10 sipes, preferably from 1 to 5 sipes, such as according to one or more of said aspects, or one or more of their embodiments.

In still another embodiment, one or more of said sipe sidewalls, protrusions, and bump stops are formed by one or more elastomer compositions (e.g., rubber compositions). Such compositions are well known in the tire art and are not within the focus of the present invention.

In another embodiment, at least a third, or at least half of the sipes of the tire are sipes in accordance with one or more aspects, or one or more of their embodiments mentioned herein.

It is noted that a lateral tread groove, such as a groove separating two (circumferentially) neighboring tread blocks, is not intended to be considered as a sipe herein.

In still another embodiment, the tire is one or more of a pneumatic tire, a winter tire, an all-season tire, and a tire having a three peak mountain snowflake (3PMSF) symbol.

In still another embodiment, the tire is one of a passenger car tire, a light truck tire, and a truck tire.

In still another embodiment, the tire is a non-pneumatic tire.

It is emphasized that multiple aspects, or multiple embodiments, and/or features thereof can be combined with one another. Moreover, embodiments and/or features of one aspect can be embodiments and/or features of another aspect of the invention. Merely for the sake of conciseness such combinations have not been reiterated herein.

## Claims

1. A tire comprising a circumferential tread portion including at least one sipe extending in an elongated direction transversely to a direction of rotation of the tire and having a pair of opposite sidewalls, wherein
(i) the pair of opposite sidewalls includes a leading sidewall and a trailing sidewall with respect to the direction of rotation of the tire, wherein the trailing sidewall extends essentially linearly along its radial height, and the leading sidewall comprises protrusions along its radial height, which extend along the elongated direction and have radially outer top sides, and wherein at least a majority of the protrusions are chamfered along their radially outer top sides; and/or
(ii) the pair of opposite sidewalls extends along the elongated direction, wherein at least one of the sidewalls comprises protrusions along its radial height, which extend along the elongated direction and have radially outer sides, wherein at least a majority of the protrusions are chamfered along their radially outer sides, and wherein a radially outermost edge of one of the sidewalls comprising protrusions is chamfered over a majority of its length along the elongated direction; and/or
(iii) the pair of opposite sidewalls extends along the elongated direction, wherein at least one of the sidewalls comprises protrusions along its radial height, which extend along the elongated direction and have radially outer sides, wherein at least a majority of the protrusions are chamfered along their radially outer sides, and wherein at least one of the sidewalls comprises at least one radially elongated bump stop extending along a majority of a radial height of the sipe and protruding towards an opposite sidewall of the sidewalls to avoid closing of the sipe between the sidewalls adjacent the bump stop.

2. The tire according to claim 1, wherein the leading sidewall comprises from 3 to 10 or from 4 to 6 of the protrusions along its radial height.

3. The tire according to claim 1 or 2, wherein the leading sidewall comprises a radially outermost leading edge which is chamfered over a majority of its length along the elongated direction.

4. The tire according to at least one of the previous claims, wherein the protrusions further have radially inner bottom sides, and wherein the radially inner bottom sides protrude essentially perpendicularly to the radial direction into the sipe.

5. The tire according to at least one of the previous claims, wherein the protrusions are provided consecutively along the radial height of the sipe such that a radially inner bottom side of a first protrusion is radially adjacent a radially outermost portion of a radially outer top side of a radially neighboring protrusion.

6. The tire according to at least one of the previous claims, wherein one or more of the protrusions protrude over one or more of i) more than 50% of a maximum width of the sipe, and ii) 5% to 30% of a maximum radial height of the sipe.

7. The tire according to at least one of the previous claims, wherein each protrusion of the protrusions being chamfered along their radially outer top side, comprises a respective chamfer having an angle with the radial direction within a range of 110° to 160°.

8. The tire according to at least one of the previous claims, wherein the protrusions being chamfered along their radially outer top side have outermost end portions which face and extend essentially in parallel to the linearly extending trailing sidewall.

9. The tire according to at least one of the previous claims, wherein the radially outermost edge is formed by a first protrusion of the protrusions being chamfered along their radially outer sides.

10. The tire according to at least one of the previous claims, wherein the protrusions are provided consecutively along the radial height of the sipe such that a radially inner bottom side of the first protrusion is radially adjacent a radially outermost portion of a radially outer top side of a radially neighboring protrusion, and a radially inner bottom side of the neighboring protrusion is radially adjacent a radially outermost portion of a radially outer top side of another radially lower neighboring protrusion.

11. The tire according to at least one of the previous claims, wherein each radially outer top side chamfers with an angle with the radial direction, which is within a range of 110° to 150°, and wherein each radially inner bottom side protrudes with an angle with the radial direction, which is within a range of 80° to 100°.

12. The tire according to at least one of the previous claims, wherein at least one of the sidewalls comprises at least one radially elongated bump stop extending along a majority of a radial height of the sipe and protruding towards another opposite sidewall of the sidewalls to avoid closing of the sipe between the sidewalls adjacent the bump stop, the bump stop extending preferably from a radially outermost edge of the at least one sidewall along the majority of the radial height of the sipe.

13. The tire according to at least one of the previous claims, wherein the elongated bump stop has a flat face side, which faces the opposite sidewall and is essentially in parallel with the opposite sidewall; and/or wherein the elongated bump stop extends over at least 90% of the radial height of the sipe.

14. The tire according to at least one of the previous claims, wherein a first sidewall of the opposite sidewalls comprises protrusions being chamfered along their radially outer sides, and wherein the at least one radially elongated bump stop is provided in between the protrusions of the first sidewall, protrudes towards a second sidewall of the opposite sidewalls, and extends over at least 90% of the radial height of the sipe, and wherein the bump stop preferably protrudes towards the second sidewall essentially as far as the protrusions of the first sidewall protrude towards the second sidewall.

15. The tire according to at least one of the previous claims, wherein the sipe comprises at least two radially extending bump stops, which are spaced from one another along the elongated direction and wherein each bump stop of the bump stops is provided in between the protrusions at the first sidewall.
